Europäisches Patentamt

European Patent Office

Office européen des brevets

(11) Publication number: 0 436 767 A2

# EUROPEAN PATENT APPLICATION

(21) Application number: 90100655.1

(51) Int. Cl.5: G03B 17/30

(22) Date of filing: 12.01.90

(43) Date of publication of application:
17.07.91 Bulletin 91/29

(84) Designated Contracting States:
DE FR GB

(71) Applicant: FUJI PHOTO FILM CO., LTD.
No. 210, Nakanuma Minami-Ashigara-shi
Kanagawa-ken(JP)

(72) Inventor: Ohi, Nakao
c/o Fuji Photo Film Co., Ltd., No. 210,
Nakanuma
Minami Ashigara-shi, Kanagawa(JP)
Inventor: Takahashi, Kohichi
c/o Fuji Photo Film Co., Ltd., No. 210,
Nakanuma
Minami Ashigara-shi, Kanagawa(JP)
Inventor: Mizuno, Kazunori
c/o Fuji Photo Film Co., Ltd., No. 210,
Nakanuma
Minami Ashigara-shi, Kanagawa(JP)
Inventor: Takahashi, Hisashi
c/o Fuji Photo Film Co., Ltd., No. 210,
Nakanuma
Minami Ashigara-shi, Kanagawa(JP)

(74) Representative: Patentanwälte Grünecker,
Kinkeldey, Stockmair & Partner
Maximilianstrasse 58
W-8000 München 22(DE)

(54) Film cassette.

(57) In a film cassette, a spool having a film roll wound on it is rotatably contained within a cassette body and a film leader of this film roll is not protruded from the cassette body. Since the film roll is held between a pair of flanges of the spool or the film roll is pressed by a projecting member and an elastic member disposed on the inner wall of the cassette body, the film roll, when the spool is rotated, is also rotated together with it. As a result, the film leader is fed outside the cassette. In order to prevent light from entering into the cassette from a film withdrawing mouth, the film withdrawing mouth is closed by a cover member and a shading sheet. Also, by virtue cf a provision of a film passage extending within the cassette in a curved state or by mounting a projecting portion on the film leader, the interior of the cassette is shaded.

FIG. 1

EP 0 436 767 A2

## FILM CASSETTE

## BACKGROUND OF THE INVENTION

This invention relates to a film cassette containing a photographic roll film light-tight and more particularly to a film cassette in which a film leader of a film roll is fed by rotating a spool having a roll film wound on it.

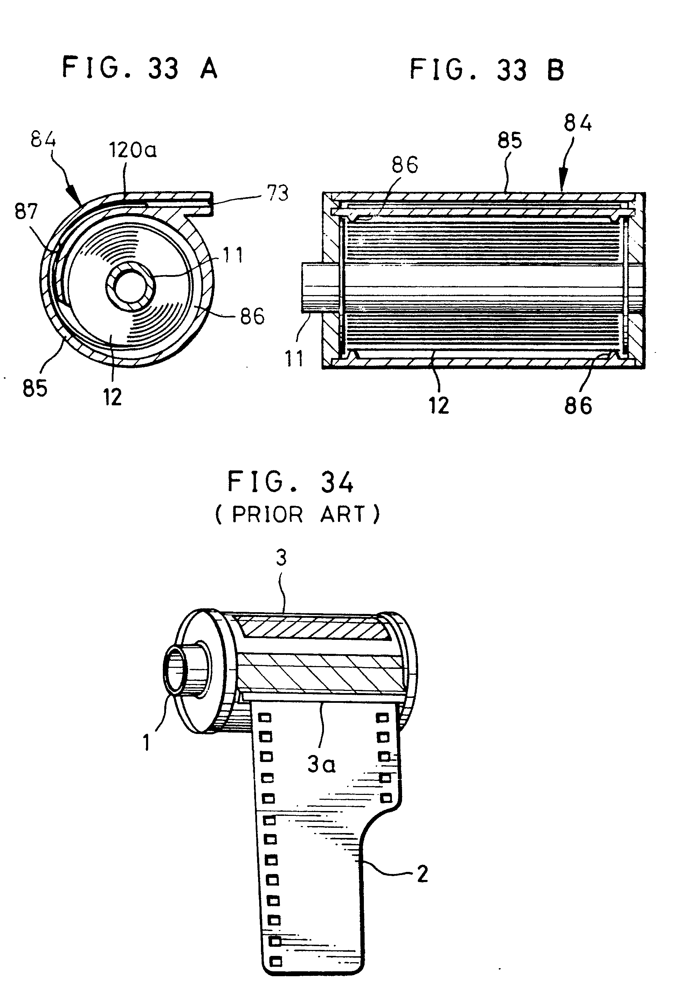

In a single lens reflex camera and a compact camera, a film cassette containing a roll of 35mm photographic film strip in width is used as shown in Fig. 34. This 35mm type of a film cassette is designed as such that the film strip with one end thereof retained by a spool 1 made of a resin material is wound on the spool 1, the spool 1 having this roll film is rotatably contained in a metallic cassette shell or cassette body 3 and the film leader 2 of the roll film is protruded from a film withdrawing mouth 3a beforehand. As is known from Japanese Utility Model Publication No. Sho 41-6297, etc., a plush having long hairs is attached to the inner surface of the film withdrawing mouth 3a in order to prevent light from entering into the cassette shell 3 through the film withdrawing mouth 3a. Regarding the shading of the film withdrawing mouth 3a, many types of it are proposed or suggested in Japanese Patent Publication No. Sho 43-3416, Japanese Utility Model Publication No. Sho 37-32164, etc. Also, with regard to the cassette shell 3, several proposals are made for forming it with a resin material, for example, in order to reduce its weight (Japanese Patent Publication No. Sho 55-21089).

However, in the case of the above-mentioned film cassette, since the film leader 3 protrudes from the cassette shell 3 even when the film cassette is not yet used, it sometimes occurs that the users, who are not much familiar with such products, are at a loss how to handle the film leader 2 when they are going to put the film cassette into a camera.

Because of the above-mentioned background, USP4832275, USP4834306 and USP4846418 propose film cassettes in which the film leader is also taken up and kept within the cassette when the film is unused yet and the film cassette containing the film upto the film leader can be put into a camera in that state. These film cassette are designed such that the spool disposed within the cassette is rotated by a mechanism on the side of a camera in order to feed the film leader. As the film leader is not protruded from the cassette at all, it has such a significant advantage as that the operation for loading the film cassette into the camera is easy.

Regarding the structure of a film cassette of the type that the spool is manually rotated to feed the film leader before the film cassette is put into a camera, there are proposals in USP4407579 and USP4423943.

In order to smoothly feed the film leader from the film withdrawing mouth without fail by rotating the spool, it is necessary to reduce the resister applied to the film strip at the time when the film is being fed. It is also required, as in the conventional film cassette, that a shading structure is provided so that outside light does not enter into the cassette from the film withdrawing mouth. If the plush is used, as seen in the prior art, in order to meet with this requirement, the resister applied to the film leader at the time when the film is being fed becomes large. As a result, there is a fear that the film leader is bent in the middle of feeding the film and a jamming is taken place disenabling the feeding of the film. Particularly, in case light is to be shaded merely by providing the plush to the film withdrawing mouth, the plush must have a high density of distribution of pile yarns and therefore the resister applied to the film leader is much increased.

In the film cassette described in the above-mentioned USP4423943, an opaque sheet is attached to the film leader in order to shade light and this is wound on the film roll within the cassette by more than one roll. However, such means merely complicates the manufacturing process of the film strip. In addition, wastes are increased when the film is developed. Moreover, in order to prevent the obaque sheet from floating from the outermost periphery of the film roll, the spool is provided with collars projecting from the outer periphery of flanges integrally formed with the both end portions of the spool in such a manner as to be opposite to each other, and the obaque sheet is pressed by the collars. In this case, it is required that the cassette and the spool are finished highly accurately. This is also unfavorable in respect of the number of working process and manufacturing cost.

## OBJECT OF THE INVENTION

A main object of the present invention is to provide a film cassette in which the film leader can be smoothly and surely fed from the cassette by rotating a spool having a film roll wound on it.

Another object of the present invention is to provide a film cassette in which the film withdrawing mouth of the cassette is provided with shading means so that a large load is not incurred to the film leader when

EP 0 436 767 A2

the film is being fed caused by rotation of the spool.

A further object of the present invention is to provide a film cassette in which the friction resister between the outermost peripheral surface of the film roll and the inner wall of the cassette is reduced when the film roll is rotated within the cassette together with the spool.

## SUMMARY OF THE INVENTION

In order to achieve the above objects, the film withdrawing mouth formed in the cassette body is closed with shading means which is designed such that the film leader can be smoothly withdrawn from the mouth. As such shading means, there may be employed an open- and closeable cover member, flexible shading piece, and an arcuate passage.

In case the cover member is employed, the cover member is moved to an open position by a mechanism on the side of the camera after the film cassette is put into the film feeding chamber and the back cover member of the camera is closed. The spool rotatably contained in the cassette body has a film roll wound thereon, and the terminal of the film is fixed to the film. When the spool is rotated by the mechanism on the side of the camera, the film roll is rotated within the cassette body together with the spool. As a consequence, the film leader of the film roll is fed outside the cassette body through the film withdrawing mouth appeared after the cover member is retreated. Since the shading of the film withdrawing mouth can be achieved by closing the cover member, it is not necessary to provide a shading plush to the film withdrawing mouth and the film leader can be smoothly fed from the film withdrawing mouth.

Furthermore, in case an arcuate film passage is formed, the film leader is fed from the film withdrawing mouth through this film passage when the spool is rotated. The curved passage portion is served not only as a guide for feeding the film leader but also as means for damping the light entered from the film withdrawing mouth so as to prevent the outside light from directly reaching the film roll set in the cassette body. Preferably, a reflection reducing treatment is applied to the inner surface of the film passage.

Also, in order to effectively shade the film withdrawing mouth without incurring a heavy load to the film leader, it is desirable that a flexible shading piece is attached to or in the vicinity of the film withdrawing mouth. As the shading piece is readily deformed by the film leader when the film leaded is fed, an excessive resistance is not applied to the film leader and a smooth movement of the film leader is assured.

In case the film leader is fed out of the cassette owing to the rotation of the spool, if the torque is large at the time when the film leader is fed, a large burden is incurred to the mechanism for rotating the spool on the side of the camera. Accordingly, it is desirable that the friction resistance between the inner wall of the cassette body and the film roll is made as small as possible. To this end, it is desirable that the cassette body and the spool are formed of a molded product of resin which contains a shading substance and an activator is applied to the cassette body. As such avtivator, a silicone oil having a structure of dimethylpolysiloxan added in the ratio of from 0.05 to 5.0 wt.%. In this case, the film can be smoothly fed without giving any adverse affection to the molding process of the cassette body and the photographic performance.

If a smooth and sure feeding of the film feeder is assured by rotating the spool as mentioned above, a camera using this film cassette requires a mechanism for catching and withdrawing the film leader from the cassette as the conventional sprocket mechanism or the like, and therefore the structure of the camera becomes simple. Further, even if the film is completely taken up within the cassette up to the film leader after a photograph is taken, the favorable shading ability can be maintained and the film strip can be feed simply by rotating the spool at the time when the film is developed. Accordingly, it does not take much time and labor for disassembling the camera in order to taken out an exposed film roll which is wound on the spool and a preliminary processing becomes easy at the time when the film is developed.

## BRIEF DESCRIPTION OF THE DRAWINGS

The above objects of the present invention and advantages obtained by the present invention will become apparent from the accompanying drawings and the detailed description of the invention to follow:

Fig. 1 is a perspective view showing the outer appearance of a film cassette according to one embodiment of the present invention;

Fig. 2 is a perspective view, partly cutaway, showing the film cassette of Fig. 1 but a cover member is removed therefrom;

Fig. 3 is a front view of a spool shown in Fig. 2;

Figs. 4 and 5 are a left side view and a right side view of the spool of Fig. 3;

Figs. 6 and 7 are a plan view and a front view of the cassette body shown in Fig. 1;

3

Figs. 8 and 9 are a left side view and a left side sectional view of the cassette body of Fig. 1;

Figs. 10 and 11 are a plan view and a front view of the cover member of Fig. 1;

Figs. 12 and 13 are a left side view and a left side sectional view of the cover member of Fig. 1;

Fig. 14 is a bottom view of the cover member of Fig. 1;

Fig. 15 is a vertical sectional view, partly cutaway, of the cassette body;

Fig. 16 is a vertical sectional view, partly cutaway, of the cassette body having a modified flange of the spool;

Fig. 17 is a left side view of the film cassette wherein the cover member is opened and the film leader is fed or protruded;

Fig. 18 is a plan view showing the partly cutaway state of a film strip wound on the spool;

Fig. 19 is a sectional view showing the partly enlarged state of the film cassette of Fig. 1;

Figs. 20 through 22 are vertical sectional views showing the important part of the cassette according to different embodiments;

Fig. 23 is an exploded perspective view of a film cassette according to another embodiment of the present invention;

Fig. 24 is a sectional view showing an important part of the embodiment shown in Fig. 23;

Fig. 25 is a front view showing the film passage according to the embodiment of Fig. 23;

Fig. 26 is a cross sectional view of the film cassette according to still another embodiment of the present invention;

Fig. 27 is a partly enlarged sectional view showing the ccvicinity of the film drawing mouth according to a further embodiment of the present invention;

Figs. 28 through 30 are partly enlarged sectional views showing the vicinity of the film withdrawing mouth in order to show other different embodiments of a shading sheet respectively;

Figs. 31A and 31B are a cross sectional view and a vertical sectional view showing a film cassette according to a further embodiment of the present invention;

Fig. 32A and 32B are a cross sectional view and a vertical sectional view of a film cassette according to a still further embodiment of the present invention;

Figs. 33A and 33B are a cross sectional view and a vertical sectional view of a film cassette according to a still further embodiment of the present invention; and

Fig. Fig. 34 is a perspective view of the conventional film cassette.

DETAILED DESCRIPTION OF THE INVENTION

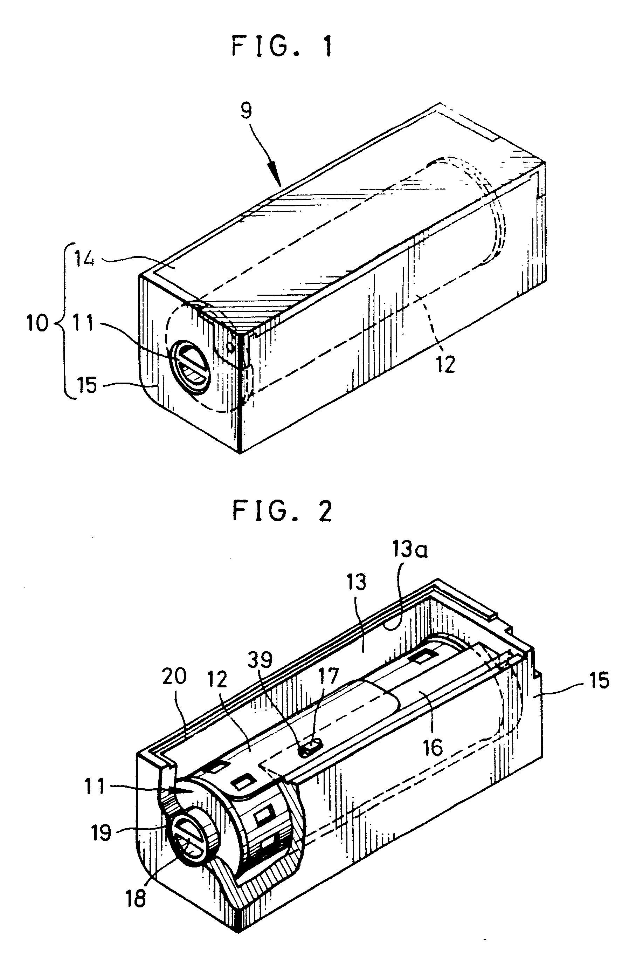

In Figs. 1 and 2 showing the first embodiment of a film cassette of the present invention, a film cassette 9 comprises a cassette 10 and a film roll 12 contained in the cassette 10. The cassette 10 comprises a generally rectangular parallelopiped cassette body 15, a cover member 14, and a spool 11. A cylindrical pocket-like storing portion 13 for storing the spool 11 having the film roll 12 wound thereon is formed in the cassette body 15, and the cover member 15 is mounted on the cassette body 15 as such that the cover member 15 can be opened and closed. The cover member 14 is attached at one side thereof to cassette body 15 by supersonic welding. In the illustrated example of Fig. 2, the cassette body 15 is shown in a state where the cover member 14 is removed from the cassette body 15.

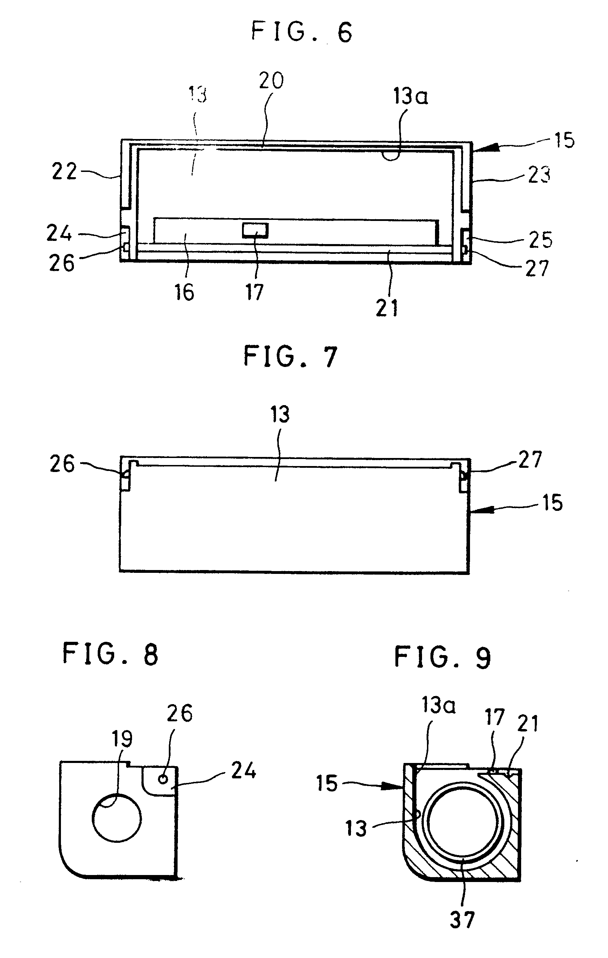

As is shown in Figs. 6 through 9, the cassette body 15 is provided on its upper surface with a rectangular opening 13a, and an eaves-like projecting portion 16 is integrally formed with the upper surface of the cassette body 15 in such a manner as to protrude from one side thereof. The eaves-like projecting portion 16 is provided on its upper surface with a retaining projecting member 17 which, as shown in Fig. 9, is engaged in a retaining hole 39 formed in a film leader 120a in order to prevent the film leader 120a from entering into the cylindrical pocket-like storing portion 13. The eaves-like projecting portion 16 is also provided with a groove 21 formed on the side of its root. Furthermore, A step 20 is formed on the other three sides surrounding the opening 15a.

The cassette body 15 has an opening 19 formed in one side surface 22 thereof and adapted to rotatably receive a driving boss 18 of the spool 11. Furthermore, the cassette body 15 is provided on both side surfaces 22 and 23 thereof with thin cutout portions 24 and 25 such that the cutout portions 24 and 25 are located at both sides of the eaves-like projecting portion 16, and projecting members 26 and 27 are projected from the cutout portions 24 and 25.

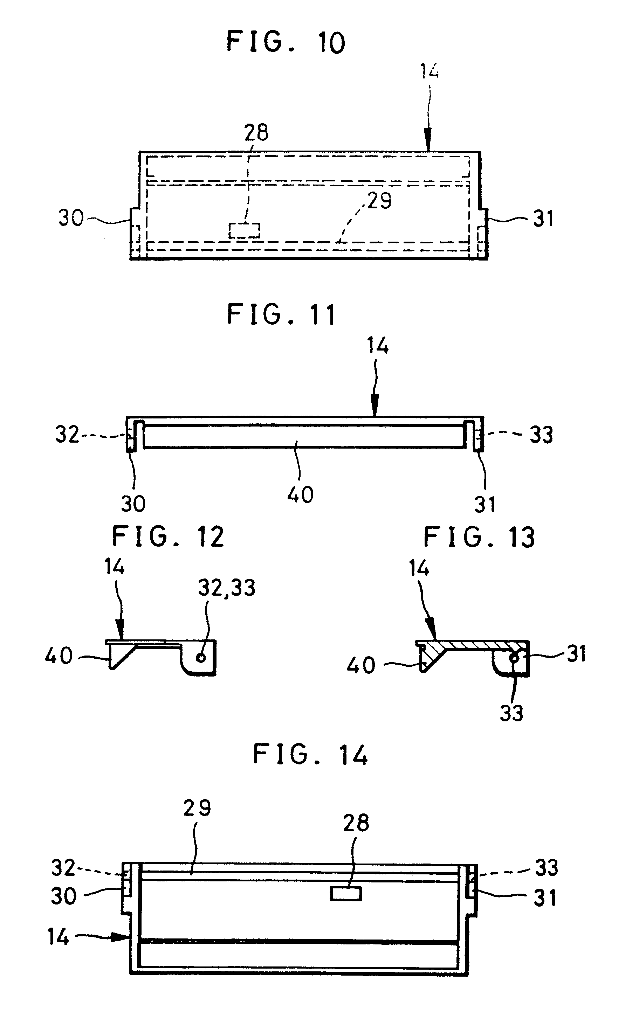

The bottom surface of the cover member 14, as shown in Figs. 10 through 14, is provided with the retaining projecting member 17 formed on the cassette body 15, and with a recess portion 28 and a rib 29 which are formed in position corresponding to the retaining projecting member 17 and the groove 21. Similarly, the cover member 14 includes lugs 30 and 31 projecting on the side of its lower surface in such a

4

manner as to correspond to the cutouts 24 and 25 which are formed in the both side surfaces 22 and 23 of the cassette body 15. Furthermore, holes 32 and 33 are formed in the lugs 30 and 31 at position corresponding to the projecting members 26 and 27.

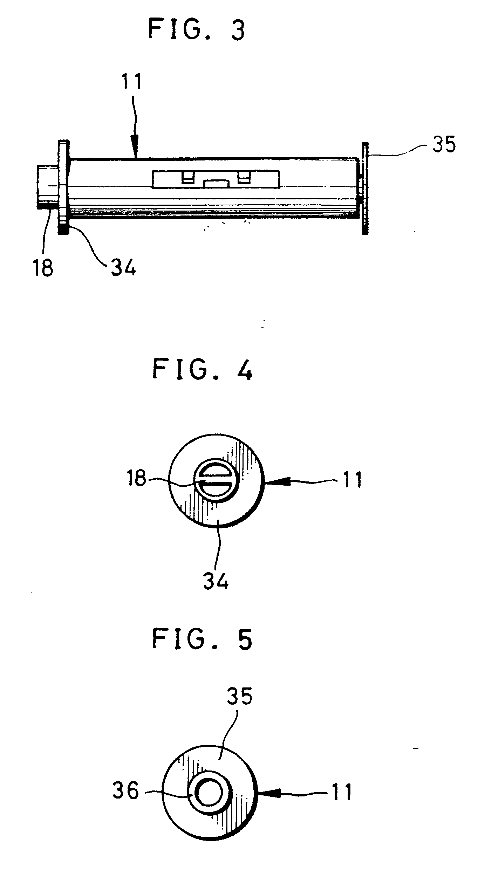

The spool 11, as shown in Figs. 3 through 5, has a driving boss 18 which is to be inserted into an opening 19 of the cassette body 15 on its one end side. On the side of the both ends of the spool 11, flanges 34 and 35 are integrally formed in such a manner as to keep slightly wider space than the width of the film roll 12. An annular thin portion 36 is formed on the end face of the flange 35. The annular thin portion 36 has a smaller diameter than that of an annular projecting member 37 which is formed on the inner wall of one side surface of the cassette body 15.

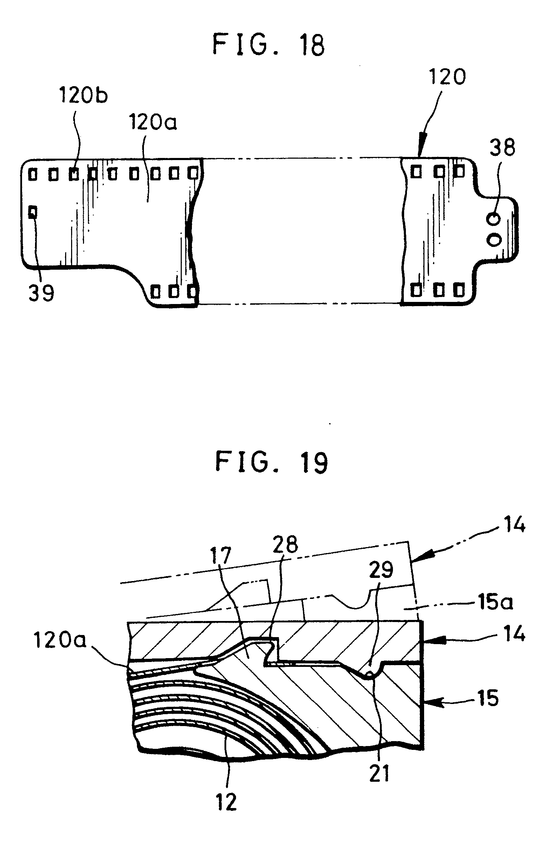

As is shown in Fig. 18, the film strip 120 is 35mm in width and is provided with known perforations 120b along both side edges thereof. Further, the terminal end portion of the film strip 120 is provided with a retaining hole 38 which is to be retained by the spool 11, and the film leader 120a is provided with a retaining hole 39 which is to be caught by the retaining projecting member 17. This film strip 120 is wound on the spool 14 to form the film roll 12.

For setting up the film cassette 9, the spool having the film roll 12 wound thereon is put into the cassette body 15 first. At this time, as the flange 34 is located in the inner position of the opening 19, light entered between the opening 19 and the driving boss 18 is shaded by the flange 34. Furthermore, the retaining hole 39 of the film leader 120a is engaged with the retaining projecting member 17 formed on the eaves-like projecting member 16 of the cassette body 15.

After the spool 11 having the film roll 12 wound thereon is put into the cylindrical pocket-like storing portion 13 of the cassette body 15, the cover member 14 is put on the cassette body 15 so that it covers the opening 13a. The piece 40 is integral with the rear end side of the cover member 14, and the piece 40 is held in alignment with the inner side of the step 20. And a supersonic horn is urged against the cassette body 15 from outside and the piece 40 is attached to the inner wall of the cassette body 15 at a lower portion of the step 20 by means of supersonic welding. Furthermore, the lugs 32 and 33 of the cover member 14 are entered into the cutouts 24 and 25 of the cassette body 15, and the projecting members 26 and 27 are engaged in the holes 32 and 33 respectively. In this state, the cover member 14 is intimately attached to the eaves-like projecting portion 16, the retaining projecting member 17 is engaged in the recess 28 and the rib 29 is engaged in the groove 21 as shown in Fig. 19. As a consequence, light can be surely prevented from entering into the cassette body 15.

When such constructed film cassette 9 is put into the camera and the known back cover member of the camera is closed, a cover member releasing mechanism (not shown) disposed on the side of the camera acts and release pins (not shown) enter into the holes 32 and 33 of the cover member 14 from the camera side. And when the release pen is moved directing upward at angles, the engagement between the holes 32 and 33 and the projecting members 26 and 27 are canceled. Then, the free end side of the cover member 14, as shown in Fig.s 17 and 19, is elastically deformed and while deforming, it is moved to the open position. By this, the film withdrawing mouth 15a is formed.

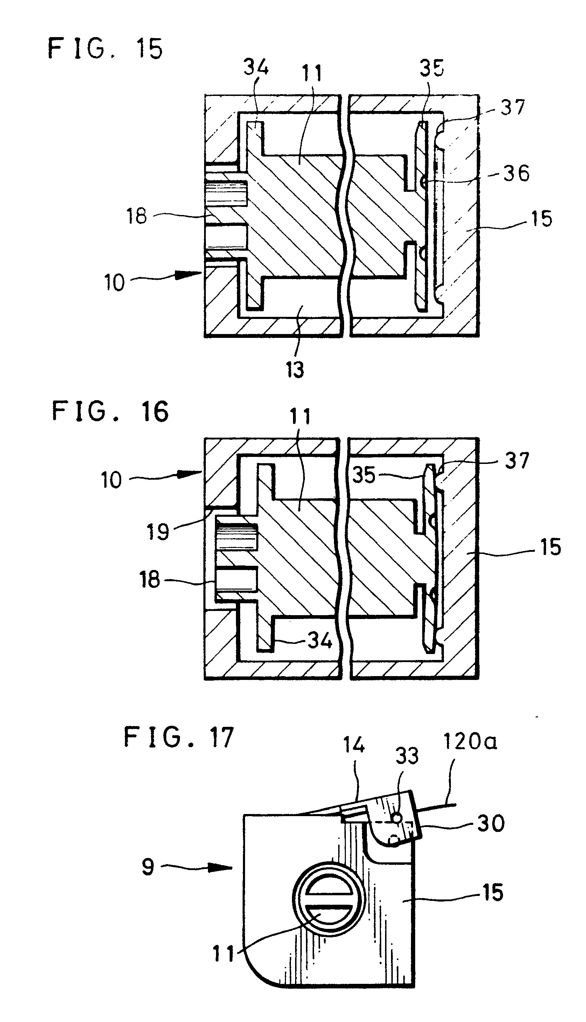

Thereafter, when the film feeding mechanism on the side on the camera is actuated, in the first place, the driving boss 18 of the spool 11 is pressed by a cam, etc. on the side of the camera. As a consequence, the spool 11 is moved from the position shown in Fig. 15 to the position shown in Fig. 16. When the spool 11 is moved and the outer peripheral side of the flange 35 is urged against the annular projecting member 37 which is formed on the inner surface of the cassette body 15, the flange 35 is deformed at the annular thin portion 36 and inclined inward. As a result, the both side edges of the film roll 12 wound on the spool 11 are held between the flanges 24 and 35. Thereafter, when the driving boss 18 is driven in the film feeding direction through a feeding mechanism of the camera, the retaining relation between the retaining hole 39 of the film leader 120a and the retaining projecting member 17 of the cassette 15 is canceled and the film leader 120a is fed outside the cassette passing through the film withdrawing mouth 15a. Thereafter, the film strip 120 is withdrawn from the film roll 12 by the known sprocket or takeup spool mounted on the camera. If it is designed as such that after the film leader 120a is wound on the takeup spool within the camera, the urging of the driving boss 18 is canceled, the withdrawing load of the film strip 120 can be reduced.

After recording a predetermined number of images on the film strip 120, the exposed film strip 120 wound on the takeup spool is rewound on the cassette body 15. At the time when this rewinding of the film is about to finish, the retaining hole 39 of the film leader 120a is caught again by the retaining projecting member 17. After the completion of the rewinding of the film, the back cover member is opened to take out the film cassette 9. By this initial operation of the back cover member, the release pins on the camera side are lowered and the cover member 14 is moved to the close position. Immediately thereafter, the release pins are escaped from the holes 32 and 33. As a consequence, since the free end side of the cover

5

member 14 is released, the film with drawing mouth 15a is closed and the interior of the cassette body 15 is maintained in a light-tight state again. By opening and closing the film withdrawing mouth 15a in the manner as mentioned, the feeding resistance can be reduced at the film withdrawing mouth 15a and a smooth feeding of the film can be performed. Furthermore, there can be realized a film cassette in which the film leader 120a is not protruded from the cassette body 15. Therefore, even an unfamiliar user can load the film cassette with ease in the same manner as handling a battery and cassette. Also, at the time when the film is to be developed, if the cover member 14 is opened and the spool 11 is rotated, the film leader 12a can be fed. Therefore, such disassembling and breaking works as seen in the prior art can be omitted.

Regarding the film cassette 9, the cassette body 15, the cover member 14 and the spool 11 were formed of a polystyrene molded product, the outside dimension was 14mm x 14mm x 42mm (the cubic measurement was about 8.1cm$^3$), and 12 shot photographic film of leica size was used as the film roll 12. The weight was 8.6g. A 12 shot Fuji collar HR (merchandise name, product of the present applicant), which is now commercially available, has a cubic measurement of 21.6cm$^3$, and a weight of 16.2g. When compared with this, the test sample was smaller in size and lighter in weight.

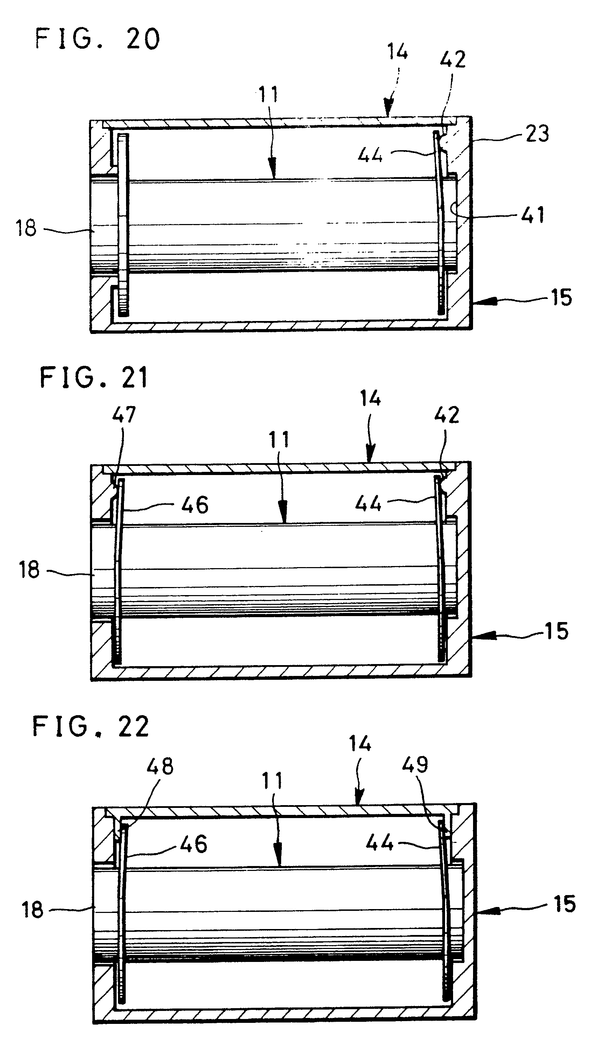

In the above-mentioned embodiment, the flange 35 is inclined inward by pressing the spool 11 from the driving boss 18 side, and the film roll 12 is held between the flanges 35 and 34 in order to transmit the rotation of the spool 11 to the film roll 12. However, the present invention is not limited to this. In order to transmit the rotation of the spool 11 at the time when the film is fed, the structure shown in Figs. 20 through 22 may be employed. the cassette body and the cover member shown in these drawings, are substantially the same to the cassette body and the cover member shown in Figs. 1 through 19 and therefore, like reference numerals are used.

In the embodiment of Fig. 20, a projecting member 42 is formed on the inner wall of one side surface 23 of the cassette body 15 besides a recess portion 41. When the spool 11 is contained in the cassette body 15, the projecting member 42 causes a part of the flange 44 to be inclined inward. In this embodiment, therefore, before the film leader 120a is fed, it is not necessary that the spool 11 is pressed from the driving boss 18 side. Instead, the film leader 120a can be fed merely by rotating the spool 11.

In the embodiment of Fig. 21, there is shown an example, in which the other flange 46 is deformed by a projecting member 47. In the embodiment of Fig. 22, projecting members 48 and 49 for deforming the flanges 44 and 47 are integrally formed with the inner surface of the cover member 14.

In case the cassette body 15, the cover member 14 and the spool 11 are formed of a polystyrene, the molding materials are added with a predetermined quantity of a dimethylpolysiloxan silicone oil or a carboxyl denaturated silicone oil as well as a shading substance. This carboxyl denaturated silicone oil is obtained by denaturating the methyl group of the dimethylpolysiloxan to the carboxyl group. By adding this silicone oil, even in a film cassette having a film size of 35mm or more, the friction between the inner wall of the cassette body and the film can be reduced. Thus, a smooth feeding of a film was obtained. The silicone oil may be added to either the cassette body 15 or the spool 11.

If the addition of the dimethylpolysiloxan silicone oil or the carboxy denaturated silicone oil is less than 0.05 wt.%, the slip effect is unobtainable. On the other hand, if it exceeds 5.0 wt.%, as the resin slips within a screw portion of a molding machine, the molding cycle becomes long and the quantity of the silicone oil oozed out on the outer surface of the cassette body is increased. As a result, the attaching strength of the supersonic seal between the cassette body 15 and the cover member 14 becomes weak. Moreover, the silicon oil oozed out on the outer surface of the inner wall of the cassette and the outer surface of the spool 11 is attached to the film. As a result, the diffusion of the development liquid to the film is prevented at the time when the film is to be developed. In view of the foregoing, the addition of the dimethylpolysiloxan silicon oil or the carboxyl denaturated oil is limited to from 0.05 wt.% to 5.0 wt.%, and preferably to from 1 wt.% to 3 wt.%.

Also, the viscosity of the silicone oil is preferably from 1000 to 60000 CS at 25˚C. If the viscosity is less than 1000 CS at 25˚C, the breed-out is hard and the photographic performance is adversely affected by it. On the contrary, if it exceeds 60000 CS, the kneading with a resin is bad and the resultant is hardly usable. Regarding the silicone oil, there are many kinds of denaturated silicone oils such as fluorize denaturated silicone oil are commercially available besides those limited in the present invention. Most of them, however, could not be used to the cassette film because they affect adversely to the film, or they fail to render a sufficient slipping property, or heat decomposition is hard or the like.

Although the resin used in the present invention includes polystyrene, shock resistance polystyrene, styreneacrylonitrile copolymer resin, ABS resin, polypropylene resin, high density polyethylene resin, etc., the present invention is not particularly limited to them.

Also, there are many kinds of carbon blacks which are added in order to obtain the shading ability and antistatic property. However, in view of avoidance of photographic adverse action (generation of photographic fog, degrading of sensitivity, upgrading of sensitivity, etc.) and of shading ability, a furnace carbon black having an average particle diameter of from 10 to 80m$\mu$, PH from 5 to 9 is preferable, and a furnace carbon black of from 15 to 50 m$\mu$, PH from 6 to 8 is particularly preferable.

If the particle diameter of the carbon black is less than 10$\mu$m, the kneading with a resin is bad. Therefore, the shading ability and physical strength are deteriorated. On the contrary, if it exceeds 100m$\mu$, the dispersion becomes good but the shading ability is poor. When the carbon concentration was increased in order to secure this shading ability, the physical strength was decreased and the moldability was deteriorated, and therefore, the resultant was hardly usable in actual practice. Most of the carbon blacks having PH exceeding the above-mentioned range were readily photographically adversely acted and thus unusable.

The addition of this furnace carbon black is limited to from 0.05 wt% to 3.00 wt.% in view of the securement of shading ability, injection moldability, and the securement of physical strength of the cassette. If the addition of the carbon black is less than 0.05 wt.%, the shading ability is insufficient and if it exceeds 3.00 wt.%, the physical strength of the cassette is lowered and the coefficient of water absorption is increased. Accordingly, a weld mark and a silver streak are generated at injection molding. As a result, it gives rise to such problems as that the outer appearance is badly spoiled and the surface strength is degraded.

Regarding the carbon blacks, there are those of thermal type, channel type, etc. besides the above-mentioned furnace type. However, they were not suitable to use in the cassette because of such undesirable nature as to easily invite a photographically adverse action.

As shading substances, inorganic pigments such as titanium oxide, iron oxide red, calcium carbonate or organic dye may be jointly used besides the carbon black.

Next, there will be described examples for manufacturing the cassette 10 shown in Figs. 1 through 19. By using a resin obtained by adding 0.5 wt.% of carbon black and 2.0 wt.% of dimethylpolysiloxan silicone oil (merchandise name of Shinetsu Chemical Co. Ltd. in Japan is KF-96H, 30000 CS) to the shock resistance polystyrene, the cassette body 15, the cover member 14 and the spool 11 were molded by ejection molding. A cassette as a product of the present invention was made using these members.

In the same manner as adopted for the product of the present invention, a cassette as a comparison product A was made using a resin obtained by adding 0.5 wt.% of carbon black to the shock resistance polystyrene. This comparison product A is not added with the dimethylpolysiloxan silicone oil. Also, by using a resin obtained by adding 0.5 wt.% of carbon black and 1.0 wt.% of oleic acid amide which is generally used as a lubricant instead of the dimethylpolysiloxan silicon oil to the shock resistance polystyrene, a comparison product B was made in the same manner as adopted for the product of the present invention. The characteristics of these three cassettes were measured. The results are shown in Table 1.

[Table 1]

|  | product of the invention | comparison product A | comparison product B |
|---|---|---|---|
| coefficient of static friction | 0.12 | 0.45 | 0.35 |

| revealing ratio of | | | |
|---|---|---|---|
| attachment between | 0.00 | 8.7 | 8.6 |
| spool and cassette | | | |
| body (%) | | | |

Although the above-mentioned embodiment regarding molding materials show a representative preferred embodiment of the cassette of the present invention, the present invention is not limited to this. The evaluation in the above Table should be interpreted as follows;

Coefficient of static friction:

Coefficients of static friction of test samples having a width of 35mm and a length of 75mm formed by ejection molding.

Revealing ratio of attachment:

Ratio of successful attachment between spools and cassette bodies when 1000 pieces of spool and 1000 pieces of cassette body are combined and required parts of the cassette body are welded by supersonic wave welding.

Although the above-mentioned embodiment employs a cover member 14 which is closed when the cassette body 15 is not loaded in the camera and opened when the cassette body 15 is loaded in the camera in order to keep the interior of the cassette body 15 light-tight, the present invention is not limited to those using the cover member 14. The type of the cover member 14 is not limited to the illustrated embodiment in which the film withdrawing mouth is opened by slightly rotating the cover member 14 in the rising direction. There may be employed various types in that the cover member 14 is greatly opened until it forms almost right angles, in that the film withdrawing mouth is formed by pushing the cover member 1 into the cassette body 15, and in that the cover member 14 is opened by being slided along the cassette body 15. Among these various types of cover members, a suitable cover member can be selected in accordance with the mechanism on the side of a camera.

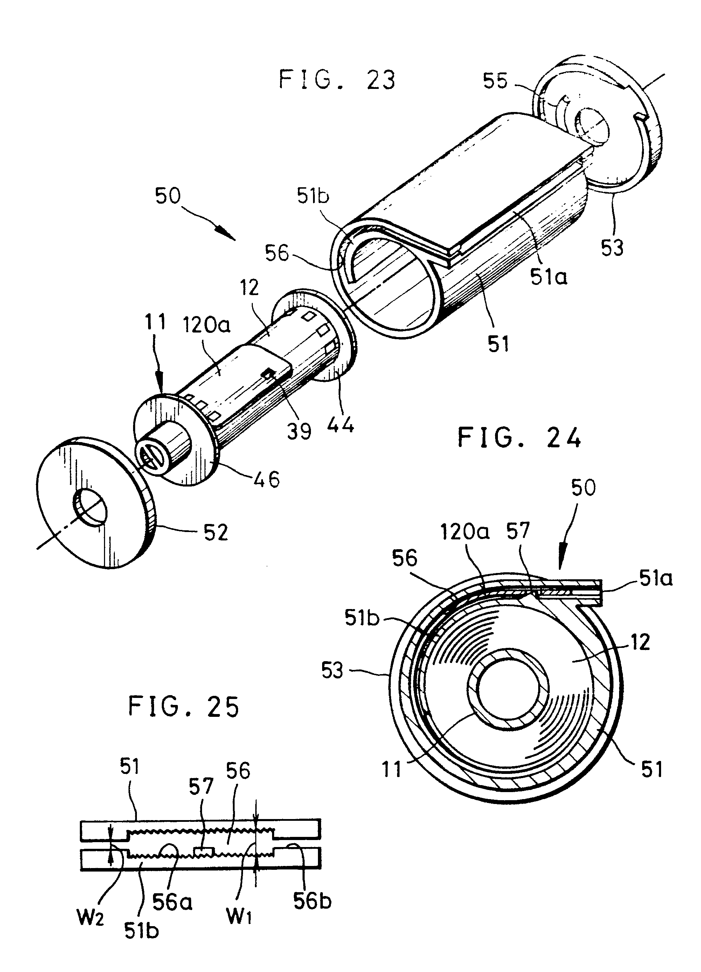

Fig. 23 shows the embodiment of a cylindrical film cassette of the present invention and like component parts of the preceding embodiment are represented by like reference numerals. This film cassette 50 has a similar configuration to that of the conventional film cassette and has no cover member at the film withdrawing mouth. A generally cylindrical cassette body 51 rotatably contains a spool 46 having the film roll 12 wound thereon, and side plates (caps) 52 and 53 are fitted to both sides of the cassette body 51. One of the side plates 52 and 53 may be integral with the cassette body 51.

A projecting member 55 performing a similar action to that of the projecting member 42 shown in Fig. 20 is formed on the inner surface of the side plate 52. When the spool 11 is contained in the cassette body 51 and the side plates 52 and 53 are put thereon, the flange 44 of the spool 11 is inclined inward to hold the film roll 12 between the flanges 44 and 46. The projecting member 54 contacts a part of the flange 44. When compared with one having a projecting member contacting the entire periphery of the flange 44, this is much advantageous for reducing friction when the spool 11 is rotated.

The cassette body 51 and the side plates 52 and 53 are formed of a resin molded product as mentioned above. The cassette body 51 has an arcuate guide piece 51b integrally formed with the interior thereof. By this guide piece 51b, an arcuate guide passage 56 communicated with the film withdrawing mouth 51a is formed. The film leader 120a, as shown in Fig. 24, is thrusted in the guide passage 56.

Fig. 25 shows the section of the guide passage 56. The guide passage 56 comprises a wide passage 56a and a narrow passage 56b. When guiding, the narrow passage 56a contacts the both side edges of the film strip 120. As the wide passage 56a does not contact the both side edges of the film strip 120, there is no fear that it scratches the film strip 120 when the film strip 120 is moved. The outer surface of the wide passage 56a is a mat surface on which a number of micro humps and valleys are formed. In case the guide passage 56 is formed to have an arcuate shape and the outer surface of the wide passage 56a is formed into a mat surface, even if light should enter from the film withdrawing mouth 51a, the light would be damped within the guide passage 56 and no photographic fog would be generated to the film roll 12 within the cassette body 51.

The width W1 of the wide passage 56a is preferably 0.8mm or less in order to maintain the shading function and the width W2 of the narrow passage 56b is preferably 0.2mm or more in order to reduce the friction resistance at the time when the film is fed. Furthermore, the length of the arcuate portion of the guide passage 56 is preferably 5mm or more. Moreover, if the film leader 120a is dyed with a dye having a shading ability or if the outer surface of the film leader 120a is provided with a knurling in order to reduce the reflectance of this portion, the shading function can be more improved.

In this embodiment, the guide passage 56 is provided on one surface thereof with a retaining projecting member 57 and the engaging hole 39 of the film leader 120a is retained in the guide passage 56 by the retaining projecting member 57. If the spool 14 is rotated in the entraining direction of the film leader 120a, the winding diameter of the film roll 12 becomes large. Therefore, the spool 11 is difficult to rotate in this direction. In order to overcome this inconvenience, the engaging projecting member 57 may be omitted.

According to the foregoing, as the film roll 12 is held between the flanges 44 and 46 of the spool 11, if the spool 11 is driven in the feeding direction of the film, the film leader 120a can be fed from the film withdrawing mouth 51a via the guide passage 56. If the rewinding is performed after a photograph is taken, the engaging hole 39 of the film leader 120a is caught by the retaining projecting member 57. Therefore, when the developing treatment is to be started, the film leader 120a can be easily fed outside the cassette body 51 from the exposed film roll 12 by rotating the spool 11.

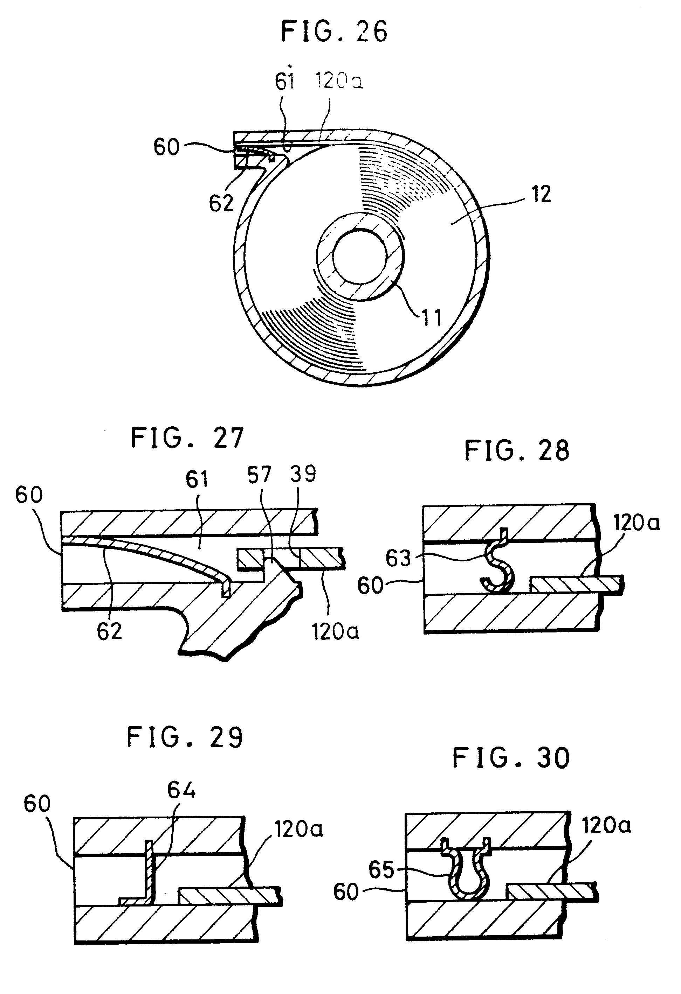

In order to prevent light from entering from the film withdrawing mouth and maintain the film leader in the vicinity of the film withdrawing mouth, the embodiment shown in Fig. 26 may also be applied. An elastic shading piece 62 is firmly attached to one inner surface of a film passage 61 communicated with a film withdrawing mouth 60. As this shading piece 62, a plastic film sheet dyed with a dye having a shading ability, for example, is used. Due to its own elasticity, the shading piece 62 presses the film leader 120a against the other inner surface of the film passage 61 and held it therebetween. By virtue of the foregoing arrangement, light from the film withdrawing mouth 60 is not allowed to enter into the film passage 61.

As is shown in Fig. 27, it may be designed such that the film passage 61 may be provided therein with a retaining projecting member 57 for retaining the retaining hole 39 of the film leader 120a so that the position of the film leader 120a is regulated by the retaining projecting member 57 and the engaging hole 39 and the film withdrawing mouth 60 is shaded by the film sheet 62.

As other examples of the shading piece 62 which can be used for the above purposes, there are a plastic sheet film attached with a thin metallic plate and a metallic foil, a plastic sheet film deposited with a metal, laminations thereof, etc. This is not necessarily limited to a film-likeshape. Furthermore, bent shading pieces 63, 64 and 65 as shown in Figs. 28 through 30 may be used. Moreover, a plurality of shading pieces may be disposed to one side or both sides of the film passage.

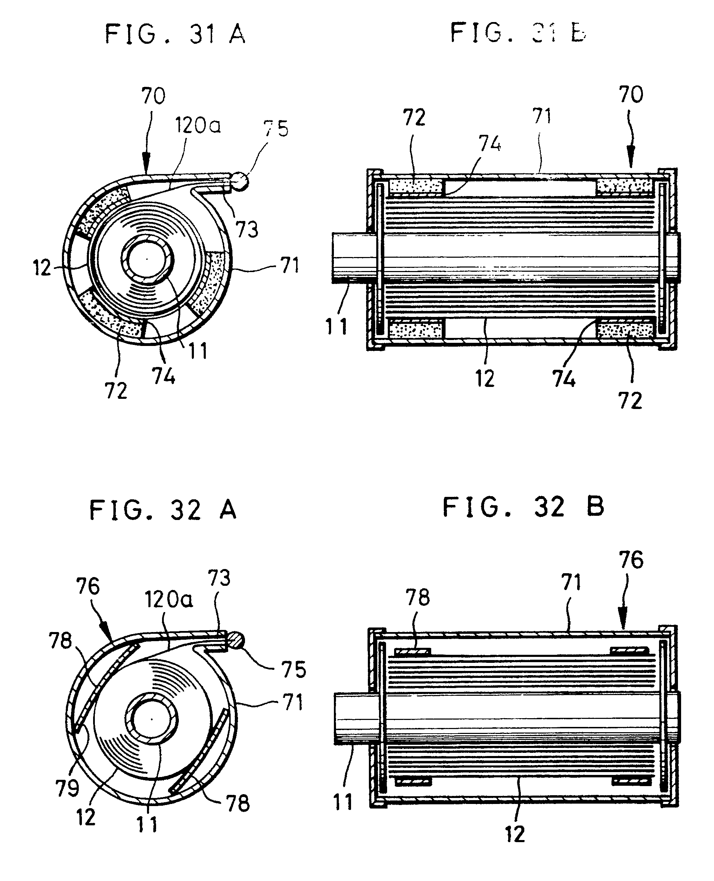

In the above-mentioned embodiments, the flange is integrally formed with the spool and the film leader is fed by transmitting the rotation of the spool to the film roll through the flange. However, the manner for feeding the film leader is not necessarily limited to this. The film cassette 70 shown in Figs. 31A and 31B is constructed such that an elastic member 72 formed of a sponge is firmly attached to the inner wall of the cassette body 71 in order to press the film roll 12 wound on the spool 11 against the spool 11. Owing to the foregoing construction, when the spool 11 is rotated in the feeding direction of the film, the film roll 12 is not wind tangled from the spool 11, the rotation of the spool 11 can be transmitted to the film leader 120a at the outermost periphery, and the film leader 120a can be fed from the film withdrawing mouth 73.

Furthermore, it is preferable that a lubricant layer is formed on the outer surface of the elastic member 72 in order to reduce the friction resistance between the elastic member 72 and the film. A favorable film feeding can be performed if the following relation is always maintained;

$$\mu_2 \geq \mu_1$$

wherein $\mu_1$ is a coefficient of friction between the lubricant layer 74 and $\mu_2$ is a coefficient of friction between the films.

A sponge formed of a poly urethane having a thickness of 3mm and compressed at a compressibility of 50% (50g/cm$^2$ pressing) was favorable as a sponge used for the elastic member 72, and a lubricant obtained by attaching "mending tape 810" (merchandise name: manufactured by Sumitomo 3M Ltd. in Japan) to the elastic member 74 was favorable as the lubricant 74. Also, in this embodiment, a rod-like retaining member 75 is firmly attached to the front end of the film leader 120a in order to hold the film leader 120a at the film withdrawing mouth 73. Therefore, when the film stripe is entrained into the cassette, the film leader 120a is prevented from being drawn into the cassette by the retaining member 75 and the film withdrawing mouth 73 is shaded.

Likewise, in a film cassette 76 shown in Figs. 32A and 32B, a plate spring 78 is used as an elastic member for pressing the film roll 12 against the spool 11. A silicon manganese steel having a thickness of 0.1mm, for example, is suitable as a material of the plate spring 78. It is preferable that the afore-mentioned "mending tape 810" is used as the lubricant layer 79 formed on the outer surface of the plate spring 78.

Furthermore, in the film cassette 84 shown in Figs. 33A and 33B, an arcuate rib 86 is integrally formed with the inner wall of the cassette body 85, and the rib 86 is contacted with the outermost periphery of the film roll 12 wound on the spool 11 under pressure. A large friction is not given to the film roll 12 by the rib 86. Also, by virtue of the provision of the rib 86, the winding of the film roll 12 cost periphery of the film roll 12 wound on the spool 11 under pressure. A large friction is not given to the film roll 12 by the rib 86. Also, by virtue of the provision of the rib 86, the winding of the film roll 12 can be prevented from being loosened by the rib 86 and when the spool 11 is rotated, the rotation is immediately transmitted to the film leader 120a. And the film leader 120a is fed outside from the film withdrawing mouth 73 via a film passage 87 having the same configuration as the embodiment shown in Fig. 3. The retaining projecting member 57 may be provided to the film passage 87 as in the embodiment shown in Figs. 23 through 25.

As means for feeding the film cassette outside the cassette body by the rotation of a spool, there are one as disclosed in USP4832275 in which the film roll is prevented from being loosened by two rings which are inclined with respect to the shaft of a spool; another as disclosed in USP4834306 in which a pair of opposite ribs are formed on a flange integrally formed on both ends of a spool so as to prevent the loosening of the winding by restraining both side edges of a film roll and deform the ribs at position for feeding the film; still another as disclosed in USP4846418 in which by sliding a spool in the axial direction, a film roll is held between the flanges so that the rotation of the spool is transmitted to the film roll. The present invention is likewise applicable to any of them.

The present invention can be modified and altered into various forms and these modifications and alternations should be interpreted as included in the protection range of the present invention.

## Claims

1. A film cassette having a cassette body, a spool rotatably contained within said cassette body, and a film roll wound on said spool, said film cassette comprising:
   an opening formed in a part of said cassette body;
   a cover member rotatably mounted on said cassette body, said opening being exposed when said cover member is moved to an open position and the interior of said cassette body being shaded light-tight when said cover member is in close position;
   means for retaining said cover member when said cover member is in the close position; and
   film feeding means for transmitting the rotation of said spool to said film roll and feeding a film leader of said film roll through said opening which is exposed because said cover member is in the open position.

2. A film cassette as claimed in claim 1, wherein said cassette body is formed in an elongated box-like shape and a recess portion for receiving said spool is formed in said cassette body.

3. A film cassette as claimed in claim 2, wherein said cover member is formed in a generally plate-like shape and one end of said cover member is connected to said cassette body.

4. A film cassette as claimed in claim 3, wherein said cassette body has four elongated surfaces, said opening being formed in a part of one surface among said four surfaces by removing the same, the remaining part of said one surface expanding in the direction for blocking said opening, said film leader being moved on said expanded part, a part of said cover member being overlapped on said expanded part in such a manner as to hold said film leader therebetween when said cover member is in the close position.

5. A film cassette as claimed in claim 4, wherein a retaining projecting member is formed on said expanded part and said retaining projecting member is engaged in a retaining hole formed in said film leader thereby to hold said film leader in the vicinity of said opening.

6. A film cassette as claimed in claim 5, wherein said film feeding means comprises a pair of flanges integrally formed with both end portions of said spool, and a projecting member formed on an inner wall of said cassette body and adapted to deform one of said flanges toward the other flange in order to hold said film roll between said pair of flanges when said film leader is fed.

7. A film cassette as claimed in claim 6, wherein said cassette body and spool are made of resin, the resin for at least one of them being added with a silicon oil having a dimethylpolysiloxan structure of from 0.05 to 5.0 wt.%.

8. A film cassette as claimed in claim 7, wherein said resin is added with a carbon black of from 0.05 to 3.00 wt.%.

9. A film cassette having a hollow cassette body, a spool rotatably contained within said cassette body, and a film roll wound on said spoon, said film cassette comprising:
a film withdrawing mouth formed in said cassette body;
a film passage for guiding a film strip withdrawn from said film roll to said film withdrawing mouth from said spool, said film passage including an arcuate passage formed by an arcuately expanded guide piece within said cassette body; and
film feeding means for transmitting rotation of said spool to said film roll and feeding a film leader of said film roll from said film withdrawing mouth.

10. A film cassette as claimed in claim 9, wherein said film feeding means comprises a pair of flanges integrally formed with both end portions of said spool, and a projecting member formed on an inner wall of said cassette body and adapted to deform one of said flanges in order to hold said film roll between said pair of flanges when said film leader is fed.

11. A film cassette as claimed in claim 9, wherein said film feeding means is pressing means disposed on the inner wall of said cassette body and contacted with the outermost periphery of said film roll in order to prevent said film roll from being wind tangled from said spool.

12. A film cassette as claimed in claim 10 or 11, wherein a reflection reducing treatment is applied to an outer surface of said film passage.

13. A film cassette as claimed in claim 12, wherein said film passage is formed wide in width at a central portion thereof in order not to contact with said film strip and the center is formed in a mat surface.

14. A film cassette as claimed in claim 12, a retaining projecting member is formed on said film passage and said retaining projecting member is engaged in a retaining hole thereby to hold said film leader in the vicinity of an opening.

15. A film cassette as claimed in claim 11, wherein said pressing means is a ring-shaped projecting member formed on the inner wall of said cassette body.

16. A film cassette having a cylindrical cassette body, a spool rotatably contained within said cassette body, and a film roll wound on said spool, said film cassette comprising:
a film withdrawing mouth formed in said cassette;
a shading piece disposed in the vicinity of said film withdrawing mouth or on at least one of wide inner surfaces of a film passage continuous to said film withdrawing mouth and elastically contacted with the other wide wall surface under pressure; and film feeding means for transmitting rotation of said spool to a film roll wound on said spool in order to feed said film leader from said film withdrawing mouth.

17. A film cassette as claimed in claim 16, wherein said shading piece is a plastic sheet.

18. A film cassette as claimed in claim 17, wherein said plastic sheet presses said film leader at its free end.

19. A film cassette as claimed in claim 17, wherein a retaining projecting member is formed on said film withdrawing mouth and said retaining projecting member being engaged in a retaining hole formed in said film leader thereby to hold said film leader in the vicinity of an opening.

**20.** A film cassette having a cylindrical cassette body, at least one cap for closing a side surface of said cassette body, a spool penetrating said cap and rotatably contained within said cassette body, and a film roll wound on said spool, said film cassette comprising:
a film withdrawing mouth; and
film feeding means for transmitting rotation of said spool to said film roll when said spool is rotated in a single direction in order to feed said film leader from said film withdrawing mouth.

**21.** A film cassette as claimed in claim 20, wherein said film feeding means is pressing means disposed on the inner wall of said cassette body and contacted with the outermost periphery of said film roll in order to prevent said film roll from being wind tangled from said spool.

**22.** A film cassette as claimed in claim 21, wherein said pressing means is an urethane.

**23.** A film cassette as claimed in claim 21, wherein said pressing means is a plate spring.

**24.** A film cassette as claimed in claim 21, wherein a projecting member adapted to close said film withdrawing mouth is firmly attached to one end portion of said film leader.

**25.** A film cassette as claimed in claim 20, wherein said cassette body and spool are made of resin, the resin for at least one of them being added with a silicon oil having a dimethylpolysiloxan structure of from 0.05 to 5.0 wt.%.

**26.** A film cassette as claimed in claim 25, wherein said resin is added with a carbon black of from 0.05 to 3.00 wt.%.

# FIG. 1

# FIG. 2

FIG. 3

FIG. 4

FIG. 5

# FIG. 6

# FIG. 7

# FIG. 8

# FIG. 9

FIG. 10

FIG. 11

FIG. 12          FIG. 13

FIG. 14

FIG. 15

FIG. 16

FIG. 17

## FIG. 18

## FIG. 19

FIG. 20

FIG. 21

FIG. 22

FIG. 23

FIG. 24

FIG. 25

# FIG. 26

61  120a

60

62

12

11

# FIG. 27

60

61  57  39

62

120a

# FIG. 28

63

60

120a

# FIG. 29

60

64

120a

# FIG. 30

65

60

120a

# FIG. 31 A

# FIG. 31 B

# FIG. 32 A

# FIG. 32 B

# FIG. 33 A

# FIG. 33 B

# FIG. 34
## ( PRIOR ART )